# EUROPEAN PATENT SPECIFICATION

(11) **EP 4 414 264 B1**
(45) Date of publication and mention of the grant of the patent: **25.11.2026**
(21) Application number: 24156684.3
(22) Date of filing: 08.02.2024
(51) Int. Cl.: B64D 11/00, B64D 47/08, G06V 40/00, G06N 20/00, B64D 11/06, B64D 45/00, G06N 3/08, G06V 10/82, G06V 20/40, G06V 20/59, G06V 40/10

(54) **PREDICTIVE ENHANCEMENT TO PASENGER EXPERIENCE USING ARTIFICIAL INTELLIGENCE AND MACHINE LEARNING**
PRÄDIKTIVE VERBESSERUNG FÜR PASENGER-ERFAHRUNG UNTER VERWENDUNG VON KÜNSTLICHER INTELLIGENZ UND MASCHINENLERNEN
AMÉLIORATION PRÉDICTIVE DE L'EXPÉRIENCE DE PASSAGER À L'AIDE D'UNE INTELLIGENCE ARTIFICIELLE ET D'UN APPRENTISSAGE AUTOMATIQUE

(30) Priority: 08.02.2023 IN 202311008094; 22.01.2024 US 202418419316
(43) Date of publication of application: 14.08.2024
(73) Proprietor: B/E Aerospace, Inc., Winston-Salem, NC 27105 (US)
(72) Inventor: KALORE, Pankaj, Lincolnshire, IL (US); ST. ROCK, Brian E., Andover, CT (US); BAJEKAL, Sanjay G., Bothell, WA (US); MCKEE, Jefferey M., Duvall, WA (US); SHRIKHANDE, Ashish, Bangalore (IN)
(74) Representative: Dehns

(56) References cited:
- US-A1- 2016 176 409
- US-A1- 2017 283 086
- US-A1- 2018 234 707
- US-A1- 2019 112 050
- US-A1- 2023 024 865

## Description

### PRIORITY

The present application claims the benefit of Indian Prov. App. No. 202311008094 (filed February 8, 2023).

### BACKGROUND

Aircraft passengers often have mundane and predictable but unmet needs. For example, when a passenger falls asleep, the passenger may need to have a light dimmed and be covered with a blanket. Likewise, when a passenger is searching for a light switch, the passenger may need the light level increased. Currently, crewmembers must actively identify these needs. It would be advantageous to have a system and method for identifying mundane passenger needs and alerting crew members or automatically servicing those needs. US2023/024865A1 and US2016/176409A1 relate to aircraft computer apparatuses.

### SUMMARY

In one aspect, embodiments of the inventive concepts disclosed herein are directed to an in-cabin system to monitor passenger states and implement certain automated services, or alert crewmembers of passenger needs at the earliest opportunity. A processor configured via a trained artificial intelligence / machine learning algorithm receives sensor data from a plurality of passenger facing sensors including cameras, microphones, temperature sensors, or the like. The processor identifies early indications of passenger needs based on passenger actions or changes in behavior over time. The processor automatically implements certain passenger comfort routines where possible, or alerts a crew member of a possible eminent passenger need.

In a further aspect, the processor may identify certain emergency situations at the earliest possible moment, and alert a crew member.

It is to be understood that both the foregoing general description and the following detailed description are exemplary and explanatory only and should not restrict the scope of the claims. The accompanying drawings, which are incorporated in and constitute a part of the specification, illustrate exemplary embodiments of the inventive concepts disclosed herein and together with the general description, serve to explain the principles.

### BRIEF DESCRIPTION OF THE DRAWINGS

The numerous advantages of the embodiments of the inventive concepts disclosed herein may be better understood by those skilled in the art by reference to the accompanying figures in which:
- FIG. 1: shows a block diagram of a system according to an exemplary embodiment;
- FIG. 2: shows an environmental view of an aircraft passenger area suitable for an exemplary embodiment;
- FIG. 3: shows an environmental view of an exemplary embodiment;
- FIG. 4: shows an environmental view of an exemplary embodiment;
- FIG. 5: shows an environmental view of an exemplary embodiment;
- FIG. 6: shows an environmental view of an exemplary embodiment;
- FIG. 7: shows a block diagram of neural network structure suitable for implementing an exemplary embodiment;

### DETAILED DESCRIPTION

Before explaining various embodiments of the inventive concepts disclosed herein in detail, it is to be understood that the inventive concepts are not limited in their application to the arrangement of the components or steps or methodologies set forth in the following description or illustrated in the drawings. In the following detailed description of embodiments of the instant inventive concepts, numerous specific details are set forth in order to provide a more thorough understanding of the inventive concepts. However, it will be apparent to one of ordinary skill in the art having the benefit of the instant disclosure that the inventive concepts disclosed herein may be practiced without these specific details. In other instances, well-known features may not be described in detail to avoid unnecessarily complicating the instant disclosure. The inventive concepts disclosed herein are capable of other embodiments or of being practiced or carried out in various ways. Also, it is to be understood that the phraseology and terminology employed herein is for the purpose of description and should not be regarded as limiting.

As used herein a letter following a reference numeral is intended to reference an embodiment of a feature or element that may be similar, but not necessarily identical, to a previously described element or feature bearing the same reference numeral (e.g., 1, 1a, 1b). Such shorthand notations are used for purposes of convenience only, and should not be construed to limit the inventive concepts disclosed herein in any way unless expressly stated to the contrary.

Further, unless expressly stated to the contrary, "or" refers to an inclusive or and not to an exclusive or. For example, a condition A or B is satisfied by anyone of the following: A is true (or present) and B is false (or not present), A is false (or not present) and B is true (or present), and both A and B are true (or present).

In addition, use of "a" or "an" are employed to describe elements and components of embodiments of the instant inventive concepts. This is done merely for convenience and to give a general sense of the inventive concepts, and "a" and "an" are intended to include one or at least one and the singular also includes the plural unless it is obvious that it is meant otherwise.

Also, while various components may be depicted as being connected directly, direct connection is not a requirement. Components may be in data communication with intervening components that are not illustrated or described.

Finally, as used herein any reference to "one embodiment," or "some embodiments" means that a particular element, feature, structure, or characteristic described in connection with the embodiment is included in at least one embodiment of the inventive concepts disclosed herein. The appearances of the phrase "in at least one embodiment" in the specification does not necessarily refer to the same embodiment.

Broadly, embodiments of the inventive concepts disclosed herein are directed to an in-cabin system to monitor passenger states and implement certain automated services, or alert crewmembers of passenger needs at the earliest opportunity. A processor configured via a trained artificial intelligence / machine learning algorithm receives sensor data from a plurality of passenger facing sensors including cameras, microphones, temperature sensors, or the like. The processor identifies early indications of passenger needs based on passenger actions or changes in behavior over time. The processor automatically implements certain passenger comfort routines where possible, or alerts a crew member of a possible eminent passenger need. In a further aspect, the processor may identify certain emergency situations at the earliest possible moment, and alert a crew member.

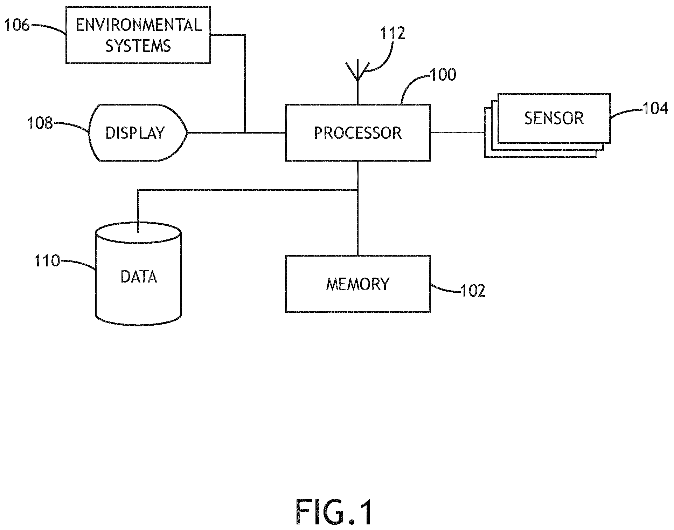

Referring to FIG. 1, a block diagram of a system according to an exemplary embodiment is shown. The system includes a processor 100 in data communication with a memory 102 for storing processor executable code. The processor 100 receives input from one or more sensors 104; the sensors 104 may include vision-based sensors (cameras), audio sensors (microphones), temperature sensors, or the like. In may be appreciated that in the context of the present disclosure, the processor 100 may comprise one or more multi-core processing elements, a state machine, special purpose processor, or any other data processing system.

In at least one embodiment, the processor 100 comprises or implements a trained artificial intelligence / machine learning algorithm (i.e., a trained neural network or the like). The trained artificial intelligence / machine learning algorithm associates inputs from the one or more sensors 104 to certain passenger states or passenger area states. Passenger states may include but are not limited to standing, sleeping, reading, or the like. Likewise, passenger area states may include but are not limited to lit, dimly lit, dark, dirty, cold, hot, or the like. Furthermore, passenger states and passenger area states may be interpreted in concert; for example, a partially eaten meal combined with a passenger at rest, a passenger moving around in the dark, a cold cabin combined with a restless passenger in a reclined seat.

In at least one embodiment, the processor 100 may associate a passenger state and / or a passenger area state with a manipulation to an environmental system 106. For example, where the processor 100 determines that the passenger is sleeping, the processor 100 may send a signal to a corresponding lighting system to dim or turn off. Likewise, the processor 100 may send a signal to a corresponding in-flight entertainment system to turn off or dim and reduce volume. When the processor 100 determines that a passenger in a dark passenger area is searching for a light switch, the processor 100 may send a signal to an environmental system 106 to increase ambient light.

In at least one embodiment, the processor 100 may determine a passenger state and / or passenger area state requires crew intervention. In such embodiments, the processor 100 may display a message on a crew-facing display 108 or transmit a signal via a data connection element 112 to a crew-facing application on a mobile device. For example, the processor 100 may identify an eaten or partially eaten meal, and determine that the passenger has not interacted with the meal for a period of time; in response, the processor 100 may alert a crew member that the meal should be cleared. When the processor 100 determines that a passenger is restless in a reclined position, and the passenger area temperature is below a threshold value, the processor 100 may alert a crew member that the passenger may need a blanket. Alternatively, where the environmental system 106 includes heating and / or cooling elements disposed in the passenger seat, the processor 100 may automatically activate such heating or cooling elements. In addition, the processor 100 may be in data communication with an automatic seat reclining element and actuate or offer to actuate such element.

In at least one embodiment, the processor 100 may utilize object recognition algorithms to identify books, laptops, phones, or the like, and track the movement of such objects for the passenger's benefit. For example, the processor 100 may record a "last known location" of a passenger's phone to assist the passenger if necessary. Furthermore, the processor 100 may identify a state of the passenger seatbelt, passenger tray table, and a reclined state of the passenger's seat. The processor 100 may then indicate to the crew via the display 108 which passengers require crew interaction for taxi, takeoff, and landing.

In at least one embodiment, frequency passengers may develop passenger specific profiles over time. Such profiles may be stored and retrieved to and from a data storage element 110 to facilitate personalized interaction with the system. In at least one embodiment, such passenger specific profiles may be embodied in a personal artificial intelligence map relating inputs to passenger specific needs. For example, a specific passenger may routinely rest with his or her eyes closed but not want the in-flight entertainment system to be adjusted in any way.

In at least one embodiment, the processor 100 may identify certain emergent or semi-emergent situations. For example, the processor 100 may identify obstacles or potential obstacles and alert a crew member. Furthermore, the processor 100 may identify passenger seizures or slurred speak via the sensors 104 and alert a crew member of a potential medical situation. The processor 100 may also manipulate certain environmental systems 106 to make the passenger easier for the crew to identify.

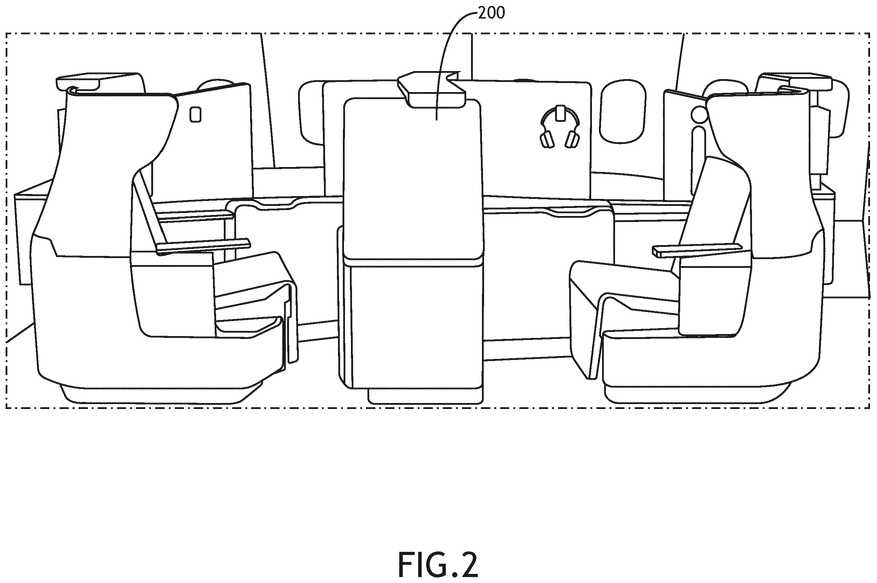

Referring to FIG. 2, an environmental view of an aircraft passenger area suitable for an exemplary embodiment is shown. The aircraft passenger area may include a plurality of sensors such as cameras and microphones. Such sensors are generally disposed to be passenger facing. It may be appreciated that certain shared passenger area components 200 may be well suited to house such sensors for multiple passengers and passenger areas.

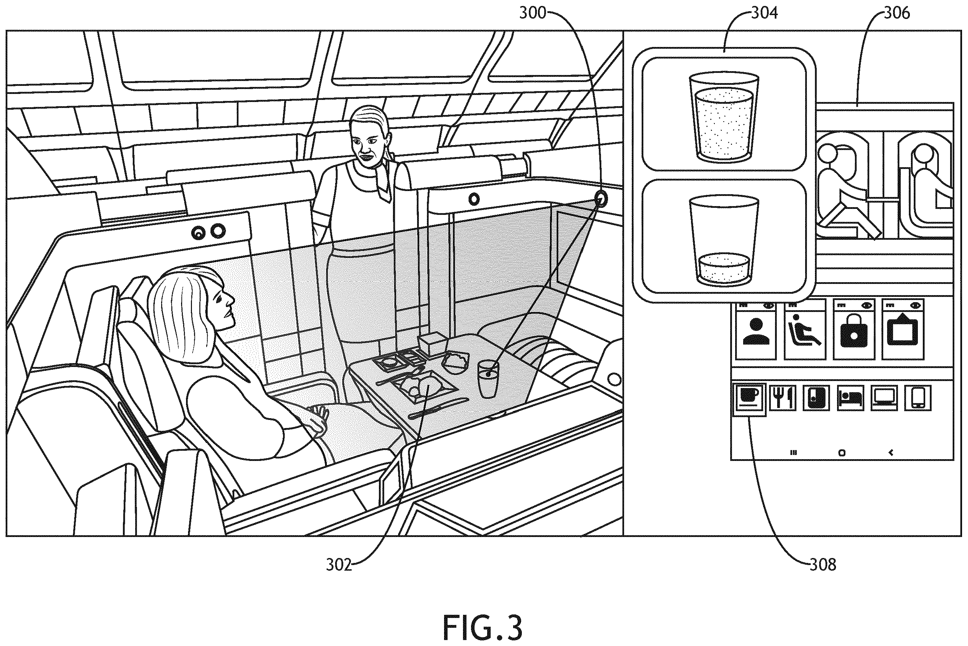

Referring to FIG. 3, an environmental view of an exemplary embodiment is shown. A passenger monitoring system according to the present disclosure may include a passenger-facing camera 300 disposed and configured to continuously or periodically observe a predefined tray-table portion 302 of the passenger area. A processor receiving an image stream from the camera 300 may identify a glass in the tray-table portion 302 and determine the state of the glass (full or empty). The processor may populate a crew-facing app 306 with data corresponding to the passenger state and passenger area state, including the state of the glass 304.

In at least one embodiment, the crew-facing app 306 may display general categories identifiable by the passenger monitoring system, and render a status for each category. For example, a beverage status indicator 308 may be illuminated according to the state of the glass 304. Such indicators may enable cabin crew members to prioritize passenger services and / or distribute certain passenger services over time to alleviate crew workload bottlenecks.

In at least one embodiment, the crew-facing app 306 may also display general status indicators (i.e., seat occupied, seat reclined, seatbelt engaged, tray-table deployed, etc.). Such indicators may serve to alleviate crew workload during taxi, takeoff, and landing phases of a flight.

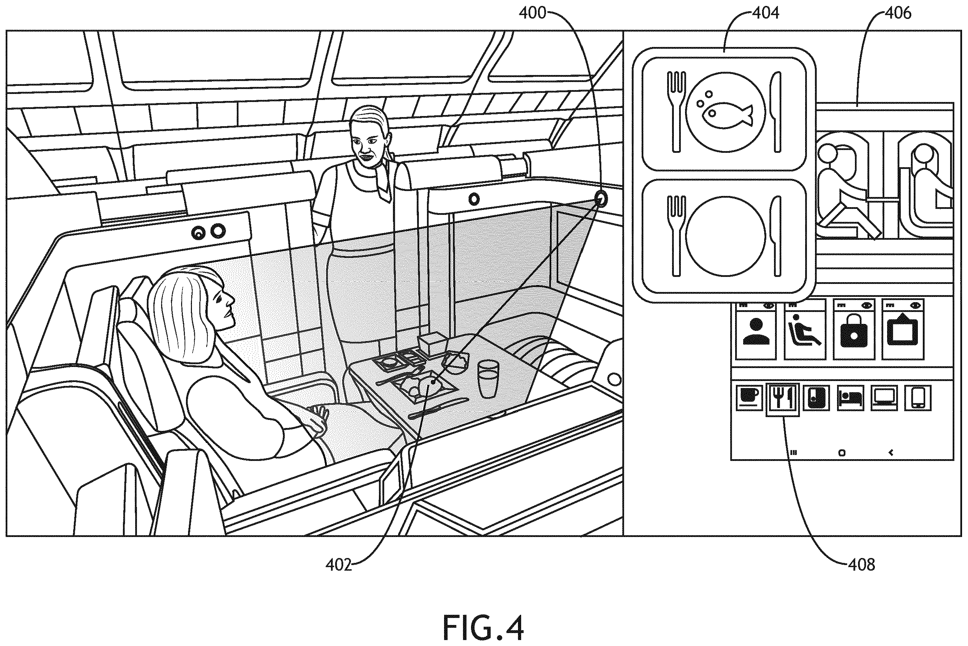

Referring to FIG. 4, an environmental view of an exemplary embodiment is shown. A passenger monitoring system according to the present disclosure may include a passenger-facing camera 400 disposed and configured to continuously or periodically observe a predefined tray-table portion 402 of the passenger area. A processor receiving an image stream from the camera 400 may identify a passenger meal in the tray-table portion 402 and determine the state of the meal (eaten, partially eaten, etc.). The processor may populate a crew-facing app 306 with data corresponding to the passenger state and passenger area state, including the state of the meal 404. In at least one embodiment, the crew-facing app 306 may display a meal status indicator 408, illuminated according to the state of the meal 404. The crew may select the meal status indicator 408 to see the state of the meal 404 (either in an iconographic form or as an actual rendering of the camera image).

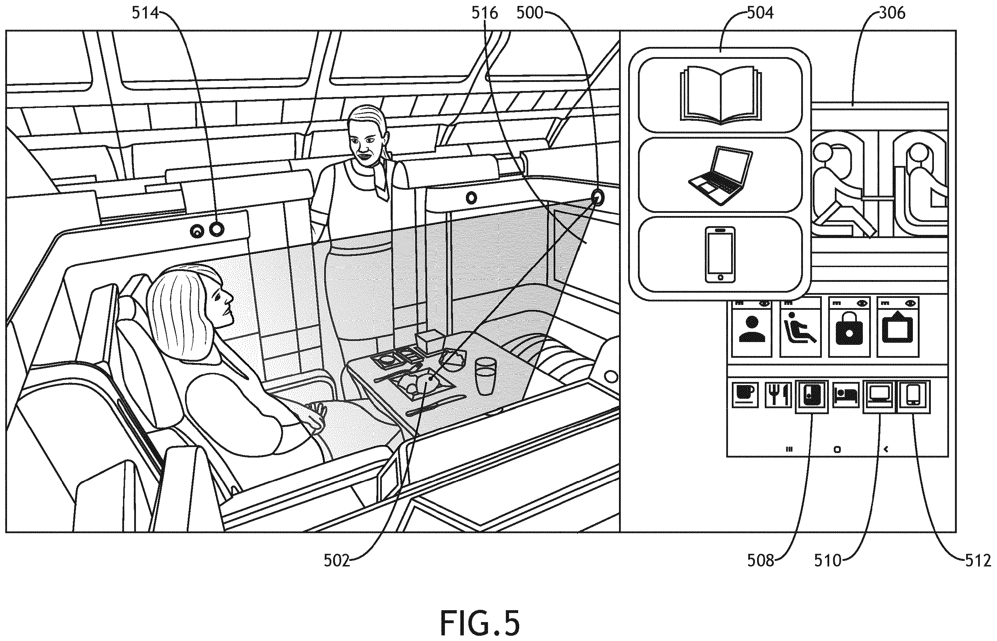

Referring to FIG. 5, an environmental view of an exemplary embodiment is shown. A passenger monitoring system according to the present disclosure may include a passenger-facing camera 500 disposed and configured to continuously or periodically observe a predefined tray-table portion 502 of the passenger area. A processor receiving an image stream from the camera 500 may identify passenger entertainment elements in the tray-table portion 502 such as laptops, tablets, books, or the like. The processor may populate a crew-facing app 306 with data corresponding to the passenger state and passenger area state, including the state of those entertainment elements 504. In at least one embodiment, the crew-facing app 306 may display status indicators 508, 510, 512, illuminated according to the state of those entertainment elements 504. Such indicators may serve to alleviate crew workload.

Where the processor has identified that a passenger is using passenger entertainment elements, the processor may automatically adjust certain passenger area features 514, 516 according to the type of passenger entertainment element. For example, the processor may adjust passenger area lighting 514 (increasing light levels when the processor identifies a book and decreasing light levels when the processor identifies a tablet). Likewise, the processor may lower the volume of an in-flight entertainment system 516 when the processor determines that the passenger is using a passenger entertainment element.

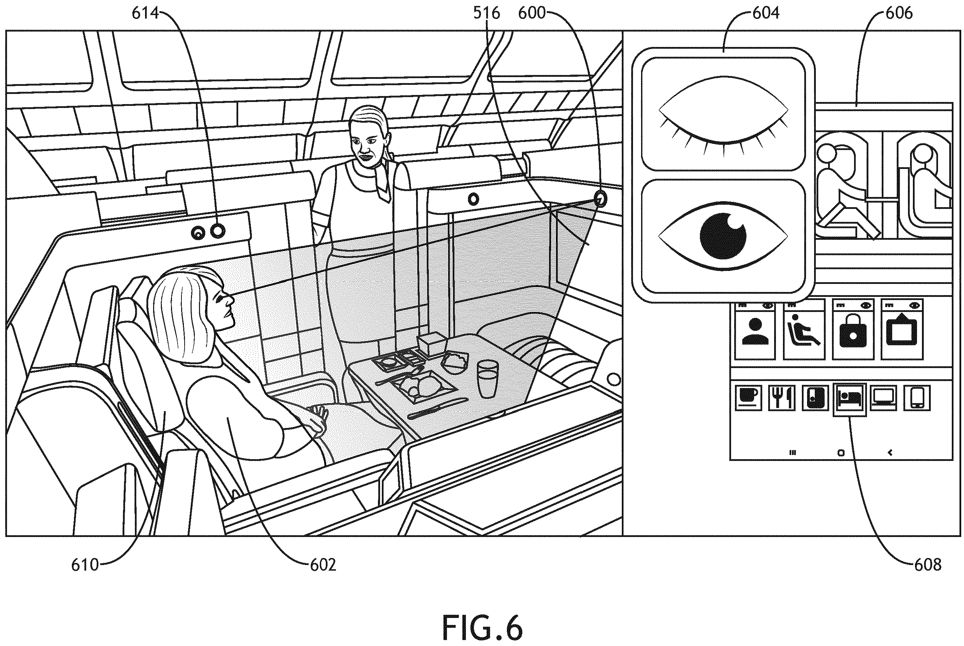

Referring to FIG. 6, an environmental view of an exemplary embodiment is shown. A passenger monitoring system according to the present disclosure may include a passenger-facing camera 600 disposed and configured to continuously or periodically observe the passenger 602. A processor receiving an image stream from the camera 600 may identify the state of the passenger 602 (asleep, awake, agitated, etc.). The processor may populate a crew-facing app 306 with data corresponding to the passenger state 604. In at least one embodiment, the crew-facing app 306 may display a status indicator 608, illuminated according to passenger state 604. Such indicators may serve to alleviate crew workload by indicating passengers that do not need any interaction.

Where the processor has identified that the passenger 602 is asleep or about to sleep, the processor may automatically adjust certain passenger area features 514, 516, 610. For example, the processor may dim passenger area lighting 514 and lower the volume of an in-flight entertainment system 516. Furthermore, the processor may adjust features of the passenger seat 610, such as reclining the seat 610 or offering to recline, and / or warming or cooling the seat 610 according to predefined metrics or passenger preferences.

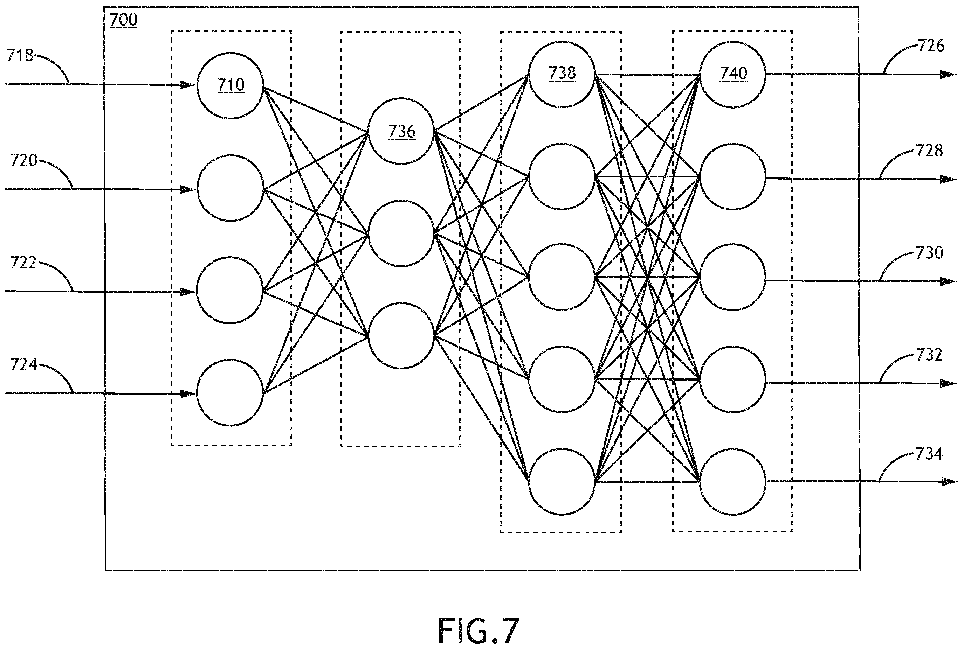

Referring to FIG. 7, a block diagram of a neural network 700 according an exemplary embodiment of the inventive concepts disclosed herein is shown. The neural network 700 comprises an input layer 702, and output layer 704, and a plurality of internal layers 706, 708. Each layer comprises a plurality of neurons or nodes 710, 736, 738, 740. In the input layer 702, each node 710 receives one or more inputs 718, 720, 722, 724 corresponding to a digital signal and produces and output 712 based on an activation function unique to each node 710 in the input layer 702. An activation function may be a Hyperbolic tangent function, a linear output function, and/or a logistic function, or some combination thereof, and different nodes 710, 736, 738, 740 may utilize different types of activation functions. In at least one embodiment, such activation function comprises the sum of each input multiplied by a synaptic weight. The output 712 may comprise a real value with a defined range or a Boolean value if the activation function surpasses a defined threshold. Such ranges and thresholds may be defined during a training process. Furthermore, the synaptic weights are determined during the training process.

Outputs 712 from each of the nodes 710 in the input layer 702 are passed to each node 736 in a first intermediate layer 706. The process continues through any number of intermediate layers 706, 708 with each intermediate layer node 736, 738 having a unique set of synaptic weights corresponding to each input 712, 714 from the previous intermediate layer 706, 708. It is envisioned that certain intermediate layer nodes 736, 738 may produce a real value with a range while other intermediated layer nodes 736, 738 may produce a Boolean value. Furthermore, it is envisioned that certain intermediate layer nodes 736, 738 may utilize a weighted input summation methodology while others utilize a weighted input product methodology. It is further envisioned that synaptic weight may correspond to bit shifting of the corresponding inputs 712, 714, 716.

An output layer 704 including one or more output nodes 740 receives the outputs 716 from each of the nodes 738 in the previous intermediate layer 708. Each output node 740 produces a final output 726, 728, 730, 732, 734 via processing the previous layer inputs 716. Such outputs may comprise separate components of an interleaved input signal, bits for delivery to a register, or other digital output based on a n input signal and DSP algorithm.

In at least one embodiment, each node 710, 736, 738, 740 in any layer 702, 706, 708, 704 may include a node weight to boost the output value of that node 710, 736, 738, 740 independent of the weighting applied to the output of that node 710, 736, 738, 740 in subsequent layers 704, 706, 708. It may be appreciated that certain synaptic weights may be zero to effectively isolate a node 710, 736, 738, 740 from an input 712, 714, 716, from one or more nodes 710, 736, 738 in a previous layer, or an initial input 718, 720, 722, 724.

In at least one embodiment, the number of processing layers 702, 704, 706, 708 may be constrained at a design phase based on a desired data throughput rate. Furthermore, multiple processors and multiple processing threads may facilitate simultaneous calculations of nodes 710, 736, 738, 740 within each processing layers 702, 704, 706, 708.

Layers 702, 704, 706, 708 may be organized in a feed forward architecture where nodes 710, 736, 738, 740 only receive inputs from the previous layer 702, 704, 706 and deliver outputs only to the immediately subsequent layer 704, 706, 708, or a recurrent architecture, or some combination thereof.

In at least one embodiment, initial inputs 718, 720, 722, 724 may comprise any sensor input from one or more cabin or passenger specific sensors such as cameras, microphones, etc. Final output 726, 728, 730, 732, 734 may comprise signals to manipulate certain environmental controls such as passenger lights, an in-flight entertainment screen, etc., or alert crew members via a crew facing system.

Embodiments of the present disclosure enable a passenger monitoring system that predicts, anticipates, and / or deduces passenger needs via augmented reality of the passenger state and passenger area state from the passenger perspective using artificial intelligence and machine learning. The passenger monitoring system arranges for those needs to be met automatically where possible or alert the cabin service provider or ground service provider. Such anticipation, prediction, and deduction is accomplished by an array of sensors and technologies including cameras, microphones, etc., and artificial intelligence, machine learning, data analysis and Fusion, Edge Computer Node Inferencing, telemetry, etc. Some services could be classified as premium and may be marketed as at-charge.

## Claims

1. A computer apparatus comprising:
one or more passenger-facing sensors (104); and
at least one processor (100) in data communication with the one or more passenger-facing sensors and a memory (102) storing processor executable code for configuring the at least one processor to:
receive a data stream from the one or more passenger-facing sensors;
determine a sleep state of a passenger based on the data stream; and
send a signal to an environmental system (106) to adjust a light level based on the determined sleep state;
wherein the at least one processor (100) is further configured to:
determine that the passenger is using a personal entertainment device based on the data stream; and
send a control signal to an in-flight entertainment system in response to determination, based on the data stream, that the passenger is using the personal entertainment device.

2. The computer apparatus of Claim 1, wherein the at least one processor is further configured to send a signal to a crew-facing display to indicate the sleep state of the passenger.

3. The computer apparatus of Claim 1 or 2, wherein the at least one processor (100) is further configured to:
determine a meal status based on the data stream; and
send a signal to the crew-facing display to indicate the meal status.

4. The computer apparatus of claim 1, 2 or 3,
wherein the at least one processor is further configured to:
determine a seatbelt status based on the data stream; and
send a signal to the crew-facing display to indicate the seatbelt status.

5. The computer apparatus of any preceding Claim, further comprising a data storage element (110), wherein the at least one processor (100) is further configured to:
periodically record passenger states; and
update a machine learning algorithm based on the recorded passenger states.

6. An aircraft passenger pod comprising the computer apparatus of any preceding claim.

7. The aircraft passenger pod of claim 6, further comprising a passenger seat reclining element, wherein the at least one processor is further configured to automatically actuate the passenger seat reclining element based on the sleep state of the passenger.

8. A passenger monitoring system comprising the computer apparatus of any of claims 1 to 5.

## Patentansprüche

1. Computervorrichtung, umfassend:
einen oder mehrere auf den Passagier gerichtete Sensoren (104); und
mindestens einen Prozessor (100) in Datenverbindung mit dem einen oder den mehreren
auf den Passagier gerichteten Sensoren und einem Speicher (102), der von einem Prozessor
ausführbaren Code zur Konfiguration des mindestens einen Prozessors speichert, um:
einen Datenstrom von dem einen oder den mehreren auf den Passagier gerichteten Sensoren zu empfangen;
einen Schlafzustand eines Passagiers basierend auf dem Datenstrom zu bestimmen; und
ein Signal an ein Umgebungssystem (106) zu senden, um ein Lichtniveau basierend auf
dem bestimmten Schlafzustand anzupassen;
wobei der mindestens eine Prozessor (100) ferner konfiguriert ist, um:
basierend auf dem Datenstrom zu bestimmen, dass der Passagier ein persönliches Unterhaltungsgerät verwendet; und
ein Steuersignal an ein Bordunterhaltungssystem als Reaktion auf die
Bestimmung, basierend auf dem Datenstrom, dass der Passagier das
persönliche Unterhaltungsgerät verwendet, zu senden.

2. Die Computervorrichtung nach Anspruch 1, wobei der mindestens eine Prozessor ferner
konfiguriert ist, um ein Signal an eine für das Besatzungspersonal sichtbare Anzeige zu senden, um den Schlafzustand des
Passagiers anzuzeigen.

3. Die Computervorrichtung nach Anspruch 1 oder 2, wobei der mindestens eine Prozessor (100)
ferner konfiguriert ist, um:
einen Mahlzeitstatus basierend auf dem Datenstrom zu bestimmen; und
ein Signal an die für das Besatzungspersonal sichtbare Anzeige zu senden, um den Mahlzeitstatus anzuzeigen.

4. Die Computervorrichtung nach Anspruch 1, 2 oder 3,
wobei der mindestens eine Prozessor ferner konfiguriert ist, um:
einen Sicherheitsgurtstatus basierend auf dem Datenstrom zu bestimmen; und
ein Signal an die für das Besatzungspersonal sichtbare Anzeige zu senden, um den Sicherheitsgurtstatus anzuzeigen.

5. Die Computervorrichtung nach einem der vorhergehenden Ansprüche, ferner umfassend ein Datenspeicherelement (110), wobei der mindestens eine Prozessor (100) ferner konfiguriert ist, um:
periodisch Passagierzustände aufzuzeichnen; und
einen Algorithmus für maschinelles Lernen basierend auf den aufgezeichneten Passagierzuständen zu aktualisieren.

6. Eine Flugzeugpassagierkapsel, umfassend die Computervorrichtung nach einem der vorhergehenden Ansprüche.

7. Die Flugzeugpassagierkapsel nach Anspruch 6, ferner umfassend ein Rückstellelement für einen Passagiersitz,
wobei der mindestens eine Prozessor ferner konfiguriert ist, um automatisch das Rückstellelement für den Passagiersitz basierend auf dem Schlafzustand des Passagiers zu betätigen.

8. Ein Passagierüberwachungssystem, umfassend die Computervorrichtung nach einem der Ansprüche
1 bis 5.

## Revendications

1. Appareil informatique comprenant :
un ou plusieurs capteurs orientés vers le passager (104) ; et
au moins un processeur (100) en communication de données avec le ou les capteurs orientés vers le passager et une mémoire (102) stockant un code exécutable par processeur pour configurer l'au moins un processeur pour :
recevoir un flux de données provenant du ou des capteurs orientés vers le passager ;
déterminer un état de sommeil d'un passager sur la base du flux de données ; et
envoyer un signal à un système environnemental (106) pour ajuster un niveau d'éclairage sur la base de
l'état de sommeil déterminé ;
dans lequel l'au moins un processeur (100) est en outre configuré pour :
déterminer que le passager utilise un dispositif de divertissement personnel sur la base
du flux de données ; et
envoyer un signal de commande à un système de divertissement en vol en réponse à la
détermination, sur la base du flux de données, que le passager utilise le dispositif de divertissement personnel.

2. L'appareil informatique de la revendication 1, dans lequel l'au moins un processeur est en outre configuré pour envoyer un signal à un dispositif d'affichage orienté vers l'équipage pour indiquer l'état de sommeil du passager.

3. L'appareil informatique de la revendication 1 ou 2, dans lequel l'au moins un processeur (100) est en outre configuré pour :
déterminer un statut de repas sur la base du flux de données ; et
envoyer un signal au dispositif d'affichage orienté vers l'équipage pour indiquer le statut de repas.

4. L'appareil informatique de la revendication 1, 2 ou 3,
dans lequel l'au moins un processeur est en outre configuré pour :
déterminer un statut de ceinture de sécurité sur la base du flux de données ; et
envoyer un signal au dispositif d'affichage orienté vers l'équipage pour indiquer le statut de ceinture de sécurité.

5. L'appareil informatique de l'une quelconque des revendications précédentes, comprenant en outre un élément de stockage de données (110), dans lequel l'au moins un processeur (100) est en outre configuré pour :
enregistrer périodiquement les états des passagers ; et
mettre à jour un algorithme d'apprentissage automatique sur la base des états des passagers enregistrés.

6. Nacelle passager d'aéronef comprenant l'appareil informatique de l'une quelconque des revendications précédentes.

7. La nacelle passager d'aéronef de la revendication 6, comprenant en outre un élément d'inclinaison de siège passager, dans lequel l'au moins un processeur est en outre configuré pour actionner automatiquement l'élément d'inclinaison de siège passager sur la base de l'état de sommeil du passager.

8. Système de surveillance de passager comprenant l'appareil informatique de l'une quelconque des revendications 1 à 5.
